# EUROPÄISCHE PATENTSCHRIFT

(11) **EP 1 378 767 B1**
(45) Veröffentlichungstag und Bekanntmachung des Hinweises auf die Patenterteilung: **16.01.2008**
(21) Anmeldenummer: 02014627.0
(22) Anmeldetag: 02.07.2002
(51) Int. Cl.: G01T 1/29

(54) **Vorrichtung und Verfahren zum Auslesen von in einer Speicherschicht abgespeicherter Information**
Method and device for reading out the information stored in a storage layer
Dispositif et procédé pour lire les informations contenues dans une couche mémoire

(43) Veröffentlichungstag der Anmeldung: 07.01.2004
(73) Patentinhaber: Agfa-Gevaert HealthCare GmbH, 51373 Leverkusen (DE)
(72) Erfinder: Stahl, Werner, 85551 Heimstetten (DE)

(56) Entgegenhaltungen:
- EP-A- 1 081 507

## Beschreibung

Die vorliegende Erfindung betrifft eine Vorrichtung und ein Verfahren zum Auslesen von in einer Speicherschicht abgespeicherter Information nach dem Oberbegriff von Patentanspruch 1 bzw. Patentanspruch 14.

Eine derartige Vorrichtung und ein derartiges Verfahren sind bekannt aus der EP 1 081 507 A2. Diese Druckschrift zeigt eine Vorrichtung, bei der die Empfangsvorrichtung über ein oberes Luftlager, das sich auf der Speicherschicht abstützt, relativ zur Speicherschicht gelagert ist. Ein unteres Luftlager ist zwischen einem transparenten Trägermaterial, auf dem die Speicherschicht angeordnet ist, und einer Strahlungsquelle angeordnet. Dieses weitere Luftlager ist in eine Unterlage integriert, die zum Führen des transparenten Trägermaterials und der auf ihm aufgebrachten Speicherschicht dient. Dadurch soll die Speicherschicht zum Auslesen entlang der Strahlungsquelle und der Empfangsvorrichtung bewegt werden. Der Luftspalt des über der Speicherschicht angeordneten Luftlagers wird durch ein Kräftegleichgewicht gebildet, einerseits durch eine von der Luft erzeugte Druckkraft in Richtung der Empfangsvorrichtung, andererseits durch die Schwerkraft, die von der Empfangsvorrichtung in Richtung der Speicherschicht wirkt. Es wird vorgeschlagen, eine Feder zu verwenden, die an einer Außenumrandung, beispielsweise dem Gehäuse der Empfangsvorrichtung, befestigt und so angeordnet ist, dass die von ihr ausgeübte Kraft in Richtung der Speicherschicht wirkt und damit den Anpressdruck auf die Luftschicht im Luftspalt erhöht.

Der vorliegenden Erfindung liegt die Aufgabe zu Grunde, eine Vorrichtung und ein Verfahren der eingangs genannten Art derart weiterzubilden, dass eine Speicherschicht mit gutem Ergebnis ausgelesen werden kann.

Diese Aufgabe wird gelöst durch eine Vorrichtung mit den Merkmalen von Patentanspruch 1 sowie durch ein Verfahren mit den Merkmalen von Patentanspruch 14.

Der Erfindung liegt die Erkenntnis zugrunde, dass der Abstand zwischen Speicherschicht und Empfangsvorrichtung dann sehr präzise eingehalten werden kann, wenn, anders als im Stand der Technik, die erste und zweite Teilführung des Führungsmittels derart miteinander verbunden sind, dass sie zangenartig auf die Bezugsoberfläche wirken. Das heißt, gemäß der Erfindung wirken die erste und die zweite Teilführung nicht unabhängig voneinander, sondern bilden gemeinsam quasi eine Zange. Damit werden insbesondere Dickenschwankungen oder sonstige Unebenheiten der Speicherschicht oder der Speicherschicht samt eines Trägermaterials, auf das die Speicherschicht aufgebracht sein kann, in optimaler Weise für das Auslesen von abgespeicherter Information berücksichtigt. Auf sehr vorteilhafte Weise kann so ein gleichmäßiger, konstanter und sehr geringer Abstand zwischen der Speicherschicht und der Empfangsvorrichtung erreicht werden.

Vorteilhafterweise wird das Führungsmittel des Weiteren nicht auf der Oberfläche der Speicherschicht, die beispielsweise von Phosphor gebildet sein kann, geführt. Die Speicherschicht ist in der Praxis nur schlecht als Führungsfläche geeignet. Dies liegt vor allem an der Rauigkeit der Oberfläche der Speicherschicht im Hinblick auf die beim Führen zu fordernde extreme Glätte. Um dies zu verstehen, muss man sich vor Augen halten, dass der Abstand besonders bevorzugt zwischen 1µm und 4µm beträgt, wobei bereits ein Abstand von 2µm zu Mischreibung führen kann, das heißt das Führungsmittel könnte kratzen. Bei einer Verwendung einer Führungsfläche, die nicht die Speicherschicht darstellt, kann diese extrem glatt ausgebildet werden, beispielsweise aus Glas. Damit lassen sich vorteilhafterweise für die Abstützung der Empfangsvorrichtung problemlos Luftlager einsetzen, die in weiteren Vorteilen resultieren. Bevorzugt kommen als Führungsflächen die Ablagefläche selbst, auf die die Speicherschicht zumindest während des Auslesens abgelegt ist, insbesondere - in Vorschubrichtung betrachtet - Randbereiche der Ablagefläche, oder auch Führungsschienen in Betracht, entlang der die Empfangsvorrichtung oder die Speicherschicht zumindest während der Ausführung der Relativbewegung geführt wird. Dabei sind diese Führungsschienen exakt an den Verlauf der Ablagefläche für die Speicherschicht angepasst. Damit ergibt sich eine sehr gute Genauigkeit beim Führen.

Eine besonders vorteilhafte Ausgestaltung der Erfindung ergibt sich, wenn als Führungsfläche zum Führen der Empfangsvorrichtung oder der Speicherschicht beim Auslesen der Speicherschicht eine solche Führungsfläche gewählt wird, deren Niveau in Richtung senkrecht zur Ebene, die durch die Ablagefläche aufgespannt wird, möglichst exakt mit dem Niveau der Ablagefläche für die Speicherschicht in Richtung senkrecht zur Ebene der Ablagefläche übereinstimmt. Dies gilt vorteilhafterweise für den gesamten Verlauf der Führungsfläche in Vorschubrichtung (x-Richtung). Der Verlauf der Empfangsvorrichtung oder der Speicherschicht beim Auslesen der Speicherschicht entspricht daher - zumindest in diese Richtung senkrecht zur Ebene, die durch die Ablagefläche aufgespannt wird, betrachtet - genau dem Verlauf der auf der Ablagefläche aufliegenden Speicherschicht in Richtung senkrecht zur Ebene der Ablagefläche. Dadurch kann vorteilhafterweise ein über den gesamten Verlauf der Speicherschicht gleicher Abstand zwischen Empfangsvorrichtung und Speicherschicht, und damit eine gute Bildschärfe gewährleistet werden. Vorteilhafterweise sind zwei (Teil)-Führungsflächen vorhanden, die beidseitig der Ablagefläche angeordnet sind. Dadurch läßt sich das Führen besonders genau durchführen.

In einer besonders vorteilhaften Ausführung sind die zwei Führungsflächen direkt mit der Ablagefläche verbunden, insbesondere integral. Dadurch kann die Übereinstimmung im Verlauf auf technisch einfache Weise realisiert und eine besonders gute Übereinstimmung erzielt werden.

Bevorzugt weist das Führungsmittel ein Lager zum Lagern der Empfangsvorrichtung auf, das insbesondere als Luftlager ausgebildet ist, das derart angeordnet ist, dass im Betrieb der Vorrichtung ein Luftspalt zwischen dem Lager und der Führungsfläche ausgebildet ist. Erfindungsgemäße Vorrichtungen werden beispielsweise als digitale Röntgenscanner eingesetzt, welche sehr hohe Ansprüche an die Konstanz der Geschwindigkeit stellen, mit der die Speicherschicht während des Auslesevorgangs ausgelesen wird. Bei üblicherweise verwendeten Gleitlagern wird der Gleichlauf aufgrund des nicht vollständig zu verhindernden Reibungseffektes gestört. Auch alle Arten von Wälzlagern sind nicht rückwirkungsfrei.

Vorzugsweise sind die erste und zweite Teilführung durch mindestens eine Feder gegeneinander vorgespannt. Damit kann sichergestellt werden, dass die Empfangsvorrichtung bei nicht erfolgter Aktivierung der Führungsmittel, insbesondere bei Verwendung von Luftlagern, fest mit der Bezugsoberfläche gekoppelt ist, da dann die durch den Luftdruck erzeugte Gegenkraft zur durch die Feder erzeugten Kraft (noch) nicht aufgebaut ist. Damit werden Beschädigungen beispielsweise der hoch sensiblen Elektronik, beispielsweise beim Transport oder unachtsamen Berühren, verhindert. Des Weiteren kann so auf besonders einfache Weise eine Gegenkraft zu dem während des Betriebs erzeugten Luftdruckes gewährleistet werden.

Es kann vorgesehen sein, dass die erste und zweite Teilführung über eine in x-Richtung verlaufende Drehachse miteinander verbunden sind. Dies stellt eine kostengünstige und einfache Realisierung einer erfindungsgemäßen Verbindung der ersten und zweiten Teilführung dar.

Dadurch, dass mindestens ein Luftlager über eine punktförmige Verbindung mit der Empfangsvorrichtung gekoppelt ist, wird vorteilhafterweise ein Selbstjustieren des Luftlagers ermöglicht. Dadurch kann Reibung auf technisch besonders einfache und effektive Weise verhindert werden.

In einer weiteren besonders vorteilhaften Ausführung der Erfindung enthalten die erste und/oder die zweite Teilführung wenigstens zwei in x-Richtung hintereinander angeordnete Unter-Teilführungen. Dadurch kann effektiv ein Verkippen des Führungsmittels in Vorschubrichtung besonders genau verhindert werden.

Vorteilhafterweise sind auch in y-Richtung betrachtet zwei Teilführungen vorhanden, mit denen sich ein Abstand in y-Richtung zwischen der Führungsfläche und dem Führungsmittel einstellen läßt. Diese beiden Teilführungen sind insbesondere ebenfalls miteinander verbunden und so gegeneinander vorgespannt, dass sie zangenartig auf die Ablagefläche (16) wirken. Damit läßt sich eine besonders genaue Führung der Empfangsvorrichtung oder der Speicherschicht auch in y-Richtung erreichen.

Weitere vorteilhafte Ausführungsformen ergeben sich aus den Unteransprüchen.

Im Nachfolgenden werden Ausführungsbeispiele der Erfindung unter Bezugnahme auf die Zeichnungen beschrieben.

Es zeigen:
- Fig. 1: in schematischer perspektivischer Darstellung eine erste Ausführungsform einer erfindungsgemäßen Vorrichtung zum Auslesen von in einer Speicherschicht abgespeicherter Information;
- Fig. 2a - 2c: eine zweite Ausführungsform einer erfindungsgemäßen Vorrichtung nach sukzessivem Abbau von Teilen der erfindungsgemäßen Vorrichtung;
- Fig. 3a - 3d: eine mit der Darstellung von Fig. 2b korrespondierende Darstellung der Lagerung der Empfangsvorrichtung, wobei aus den Darstellungen der Fig. 3b - 3d Details deutlich zu erkennen sind;
- Fig. 4: die Darstellung von Fig. 3a in teilweise geschnittener Darstellung in Frontansicht;
- Fig. 5a, b: eine detailliertere Darstellung von Einzelheiten der Fig. 3b;
- Fig. 6: eine detaillierte Darstellung eines bevorzugt verwendeten Luftlagers;
- Fig. 7a, b: in Seitenansicht und perspektivischer Darstellung einen bevorzugt bei der erfindungsgemäßen Vorrichtung zu verwendenden Präzisionstaster;
- Fig. 8: in detaillierter Darstellung eine bevorzugt verwendbare Verstelleinheit; und
- Fig. 9: in schematischer Darstellung das durch die Verwendung von Luftlagern ermöglichte Pendeln der Empfangsvorrichtung, beispielhaft gezeigt am Pendeln um die z-Achse.

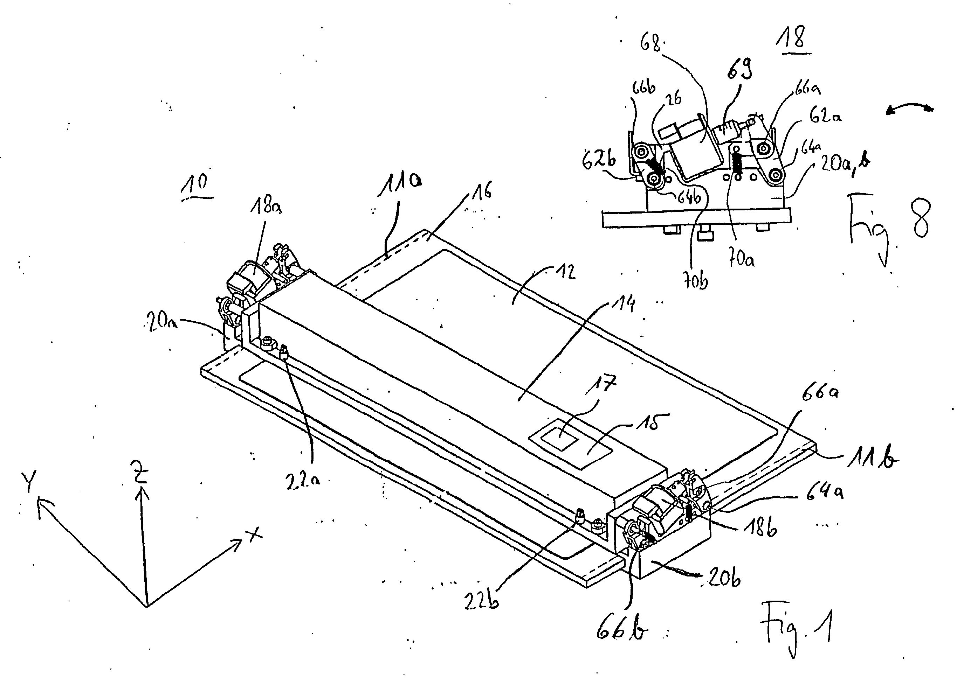

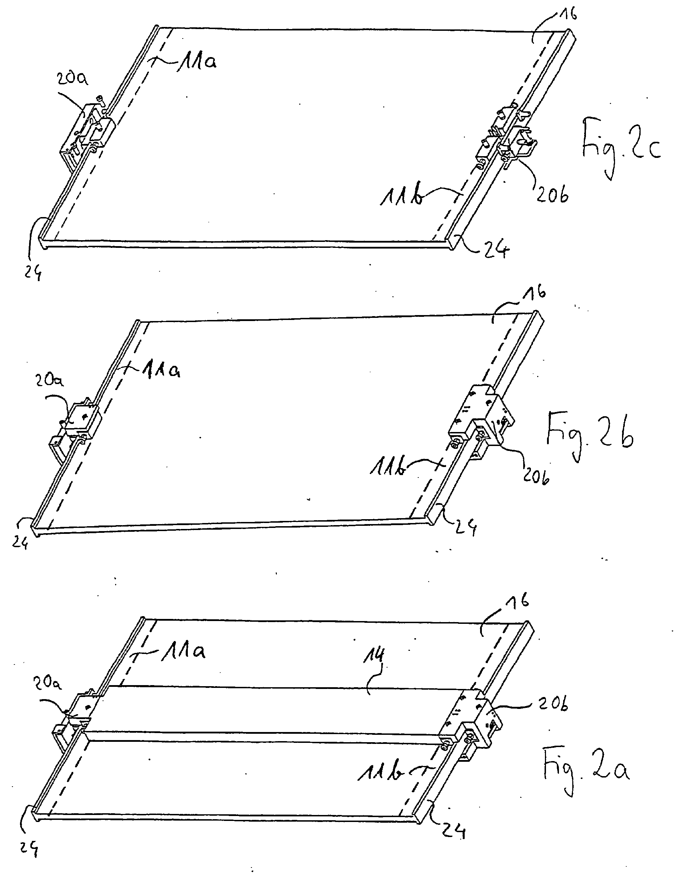

Fig. 1 zeigt einen digitalen Scanner 10 für Röntgenanwendungen als erfindungsgemäße Vorrichtung zum Auslesen von in einer Speicherschicht 12, die auf einer Ablagefläche 16 angeordnet ist, abgespeicherter Information. Die Ablagefläche 16 spannt eine x-y-Ebene auf. Eine z-Richtung verläuft senkrecht zu dieser x-y-Ebene. Der Scanner 10 umfasst einen Abtastkopf 14, in dem eine Empfangsvorrichtung zum Empfangen einer von der Speicherschicht 12 ausgesandten Emissionsstrahlung angeordnet ist. Die Empfangsvorrichtung kann eine CCD-Zeile mit vorgeschalteten Abbildungsoptiken enthalten. Eine Strahlungsquelle zum Aussenden von einer Anregungsstrahlung ist ebenfalls in dem Abtastkopf 14 angeordnet, oder bei einem Durchlichtscanner unterhalb der Ablagefläche 16. Die Strahlungsquelle kann eine Vielzahl von nebeneinander angeordneten Laserdioden aufweisen, deren Strahlungen über Optiken auf die Speicherschicht 12 geführt werden, wobei eine Zeile der Speicherschicht 12 anregbar ist. Der Abtastkopf 14 ist über eine erste und eine zweite Verstelleinheit 18a, 18b mit einer ersten und einer zweiten Lagervorrichtung 20a, 20b verbunden, mit denen der Abtastkopf 14 auf der Ablagefläche 16 geführt wird. Die beiden Lagervorrichtungen 20a, 20b sind dabei in zwei Randbereichen 11 a und 11 b der Ablagefläche 16 angeordnet. Dadurch ist gewährleistet, dass der Verlauf der Randbereiche 11a, 11b in z-Richtung exakt mit dem Verlauf der Ablagefläche 16 übereinstimmt. Das jeweilige Niveau in z-Richtung der Randbereiche 11 a, 11 b stimmt mit dem Niveau in z-Richtung der Ablagefläche 16 überein. Während eines Auslesevorgangs wird der Abtastkopf 14 in x-Richtung über die Speicherschicht 12 geführt, angetrieben von einer nicht dargestellten Antriebsvorrichtung. Die Ablagefläche 16 ist hier vorteilhafterweise aus Glas gefertigt. Die Oberfläche von Glas kann besonders glatt gefertigt werden und gewährleistet somit eine besonders exakte Führung des Abtastkopfes 14. Fig. 1 zeigt weiterhin ein Steuermittel 15 das zum Steuern des Auslesens der Speicherschicht 12 mittels des Scanners 10 dient. Das Steuermittel 15 ist hier auf dem Abtastkopf 14 angebracht und enthält einen Speicher 17, in dem verschiedene für das Auslesen benötigte Informationen abgespeichert sind und auf den das Steuermittel 15 bei Bedarf zugreifen kann. Auf die Bedeutung eines ersten und zweiten Präzisionstasters 22a, 22b wird weiter unten detaillierter eingegangen werden. Dabei ist es allerdings möglich, statt zweier Präzisionstaster auch nur einen einzigen einzusetzen.

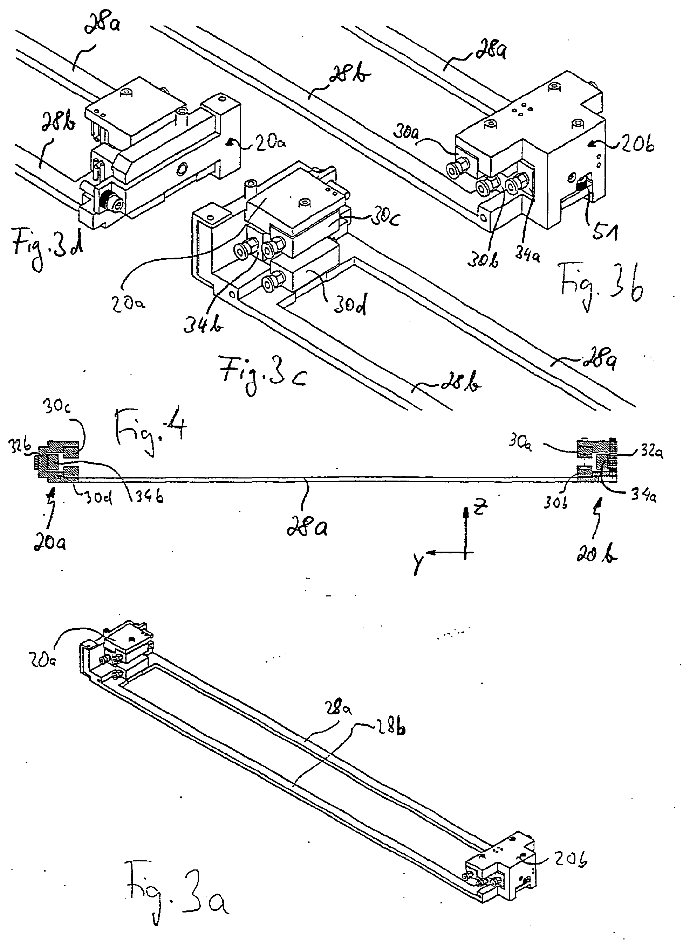

Die Fig. 2a bis 2c zeigen einen Aufbau der erfindungsgemäßen Vorrichtung, bei der die Ablagefläche 16 an den beiden Endseiten in y-Richtung zur besonders einfachen Lagerung und Führung des Abtastkopfs 14 gegenüber der Ablagefläche 16 ausgeprägte Randabschlüsse 24 aufweist. Diese Randabschlüsse 24 dienen der Führung des Abtastkopfes 14 in y-Richtung. Fig. 2a zeigt den Abtastkopf 14 nach Abnahme seiner Abdeckkappe. Die Verstelleinheiten 18a, 18b wurden ebenfalls entfernt und sind somit nicht dargestellt. Fig. 2b zeigt die Anordnung von Fig. 2a ohne Abtastkopf 14, während Fig. 2c die Anordnung von Fig. 2b zeigt, wobei die Gehäuseabdeckungen der linken und der rechten Lagervorrichtung 20a, 20b entfernt wurden.

Fig. 3a korrespondiert mit der Darstellung von Fig. 2b, wobei jedoch die Ablagefläche 16 in der Darstellung entfernt wurde. Zu erkennen ist, dass die linke und die rechte Lagervorrichtung 20a, 20b über zwei Stege 28a, 28b miteinander verbunden sind. Fig. 3b zeigt die rechte Lagervorrichtung 20b und Fig. 3c die linke Lagervorrichtung 20a von Fig. 3a detaillierter. Die rückwärtige Ansicht der linken Lagervorrichtung 20a ist in Fig. 3d dargestellt.

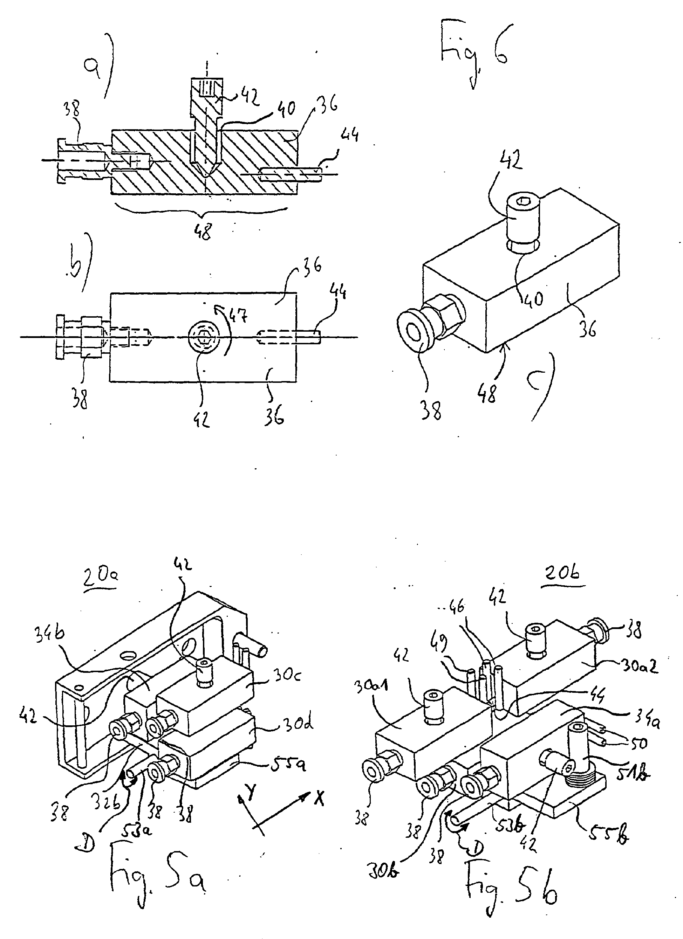

Fig. 4 zeigt schematisch eine teilweise geschnittene Frontansicht der Darstellung von Fig. 3a, aus der erkennbar ist, dass die Lagervorrichtungen 20a und 20b über zwei in z-Achsenrichtung zusammenwirkende Luftlager 30a, 30b bzw. 30c, 30d verfügen. Über eine Verbindung 32a der rechten Lagervorrichtung 20b sind deren Luftlager 30a, 30b und über eine Verbindung 32b der linken Lagervorrichtung 20a sind deren Luftlager 30c, 30d in z-Achsenrichtung federnd gegeneinander vorgespannt. Kräfte zur Erzeugung der Vorspannungen können beispielsweise mittels Tellerfedern realisiert werden, die auf die Verbindungen 32a und 32b wirken. Der im Betrieb durch die Luftlager jeweils erzeugte Luftdruck bildet Gegenkräfte zu den von den Tellerfedern erzeugten Kräften. In y-Richtung wirken zwei Luftlager 34a, 34b im Sinne eines Lagers und eines Gegenlagers zusammen. Die Luftlager 34a, 34b in y-Richtung sind ebenfalls federnd gegeneinander vorgespannt. Die Ablagefläche 16, auf die sich die verschiedenen Luftlager abstützen, ist durch die Luftlagerpaare quasi wie zwischen einer Zange eingespannt.

Fig. 5a zeigt die Luftlager 30c, 30d und 34b der linken Lagervorrichtung 20a, Fig. 5b die Luftlager 30a1, 30a2, 30b und 34a der rechten Lagervorrichtung 20b mit größerer Genauigkeit. Eines der verwendeten Luftlager ist stellvertretend in den Fig. 6a - c dargestellt und, ohne Spezifikation seiner Einbaustelle in einer der Lagervorrichtungen 20a, 20b, allgemein mit der Bezugsziffer 36 bezeichnet. Das Luftlager 36 umfasst einen Luftanschluss 38 sowie eine Lagerung 40, in der beispielhaft zur Erzielung einer punktförmigen Lagerung eine Kegelschraube 42 angeordnet ist, die mit der zugehörigen Gehäuseabdeckung der jeweiligen Lagervorrichtung 20a, 20b und damit dem zu lagernden Abtastkopf 14 starr zu verbinden ist. Dazu ist in den Kopf der Kegelschraube 42 ein Gewinde eingebracht. Durch die punktförmige Lagerung über die Spitze der Kegelschraube 42 wird ein selbstjustierendes Lager realisiert.

Fig. 6b zeigt eine Draufsicht des Luftlagers 36. In dem Luftlager 36 ist eine Verdrehsicherung 44 angeordnet, um zu verhindern, dass das Luftlager 36 in der in Fig. 6b mit einem Pfeil 47 gekennzeichneten Richtung rotiert. Die Luftauslassseite des Luftlagers 36 ist mit dem Bezugszeichen 48 gekennzeichnet. Sie enthält Luftausströmöffnungen, durch die über den Luftanschluss 38 in das Lager eingeführte Luft ausgeblasen wird.

Zurück zur Darstellung in Fig. 5b: Zu erkennen ist, dass das obere Luftlager 30a (siehe Fig. 4) hier zwei Luftlager 30a1, 30a2 umfasst, die in x-Richtung nebeneinander angeordnet sind. Dadurch wird sichergestellt, dass der Abtastkopf 14 während der Aktivierung der Luftlager nicht um die y-Achse kippt. Der oben allgemein beschriebenen Verdrehsicherung 44 entsprechen hier Verdrehsicherungen 46 für das Luftlager 30a2, Verdrehsicherungen 49 für das Luftlager 30a1 und Verdrehsicherungen 50 für das Luftlager 34a. Die Verdrehsicherungen 46, 49, 50 sind an ihren in der Fig. 5b dargestellten jeweiligen Enden mit der nicht dargestellten Gehäuseabdeckung der Lagervorrichtung 20b befestigt. Die Kegelschrauben 42 der Fig. 5a, 5b werden über die Verbindungen 32a, 32b, mit der Lager und Gegenlager miteinander verbunden sind, mit dem Abtastkopf 14 verbunden.

Die Fig. 5b zeigt des Weiteren eine Tellerfeder 51 b, die zur Erzeugung einer Kraft zur Realisierung einer Vorspannung des Luftlagerpaares 30a1, 30a2 und 30b in z-Richtung dient. Die Tellerfeder 51 b ist an ihrer Oberseite mit einem Gewinde versehen, über das die Tellerfeder 51 b an der Gehäuseabdeckung der Lagervorrichtung 20b befestigt werden kann (siehe auch Darstellung in Fig. 3b). Die von der Tellerfeder 51 b erzeugte Kraft wird hier über eine Verbindungsplatte 55b auf das Luftlager 30b übertragen, das mit der Verbindungsplatte 55b verbunden ist. Die Verbindungsplatte 55b ist dabei mit einer in x-Richtung verlaufenden Drehachse 53b verbunden, die ein Verkippen der Verbindungsplatte 55b und damit des Luftlagers 30b entlang einer Drehrichtung D ermöglicht. Die Drehachse 53b ist an ihren beiden Enden in dem (nicht dargestellten) Gehäuse der Lagervorrichtung 20b befestigt. Die von den Luftlagern 30a1, 30a2 und 30b im Betrieb erzeugten Luftdrücke bilden eine Gegenkraft zu der durch die Tellerfeder 51b erzeugten Kraft. Dadurch entsteht die zangenförmige Lagerung der Ablagefläche 16, die sich zwischen den Lagern 30a1, 30a2 und 30b befindet. Eine der Tellerfeder 51b entsprechende weitere Tellerfeder (nicht dargestellt), eine Verbindungsplatte 55a sowie eine Drehachse 53a sind für die Lagervorrichtung 20a vorgesehen, um auch da die zangenförmige Lagerung der Ablagefläche 16 zu gewährleisten.

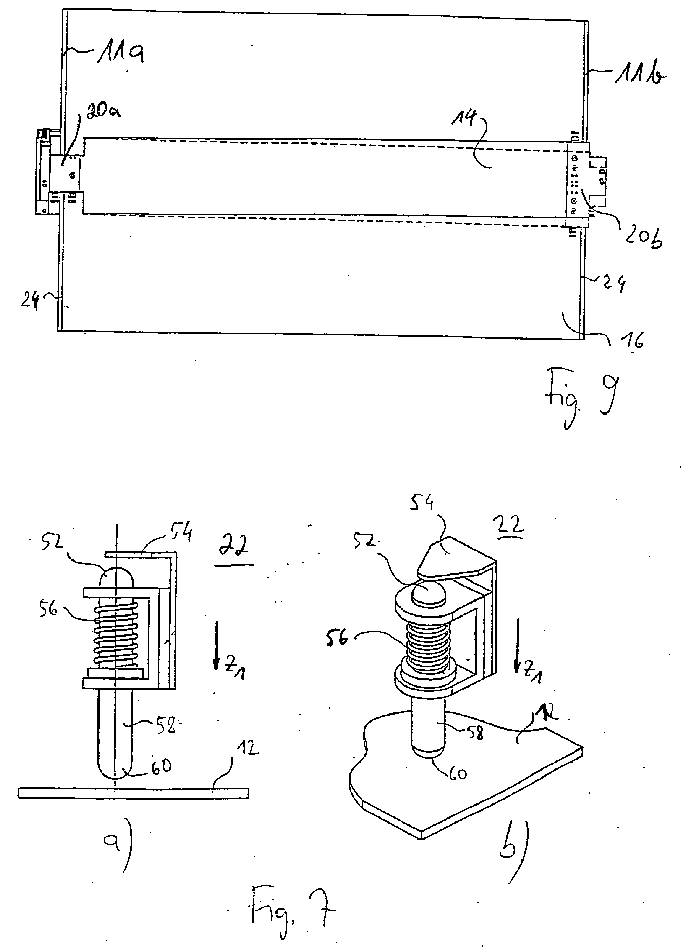

Fig. 7a und 7b zeigen eine Ausführungsform eines bereits in Fig. 1 dargestellten Präzisionstasters 22. Der Präzisionstaster 22 ist mit dem Abtastkopf 14 ortsfest verbunden, wobei vorteilhafterweise vorgesehen sein kann, dass der Präzisionstaster in y-Richtung verschiebbar angeordnet ist. Zur Normierung des Abstands zwischen der Speicherschicht 12 und der im Abtastkopf 14 enthaltenen Empfangsvorrichtung wird der Abtastkopf 14, der mit dem Präzisionstaster 22 verbunden ist, soweit in z₁-Richtung, d. h. in Richtung der Speicherschicht 12, abgesenkt, bis eine Oberseite 52 eines Kontaktstifts 58 mit einer Kontaktfeder 54 in Kontakt tritt. In diesem Fall ist eine Unterseite 60 des Kontaktstifts 58 mit der Speicherschicht 12 in Kontakt. Eine Feder 56 sorgt dafür, dass ohne entsprechenden Druck auf die Unterseite 60 des Kontaktstifts 58, d. h. ohne Widerstand durch die Speicherschicht 12, die Oberseite 52 des Kontaktstifts 58 und die Kontaktfeder 54 nicht in Kontakt sind. Nach einer derart durchgeführten Normierung wird mittels der in Fig. 8 dargestellten Verstelleinheit 18 ein optimaler Abstand zwischen Speicherschicht 12 und Empfangsvorrichtung des Abtastkopfes 14 eingestellt, indem der Abtastkopf 14 nach Berühren der Kontaktfeder 54 durch die Oberseite 52 des Kontaktstifts 58 um den optimalen Abstand in entgegengesetzter z₁-Richtung zurückgefahren wird. Dadurch ergibt sich zwischen der Unterseite 60 des Kontaktstiftes 58 und der Speicherschicht 12 ein Abstand. Das Einstellen des optimalen Abstands wird einfachheitshalber durch das Steuermittel 15 (Fig. 1) gesteuert. Der optimale Abstand kann durch eine zuvor durchgeführte Kalibrierung des Scanners ermittelt worden sein. Durch den optimalen Abstand wird insbesondere gewährleistet, dass die Bildschärfe beim Auslesen der Speicherschicht 12 sehr gut und möglichst über die gesamte Fläche der Speicherschicht 12 gleich ist.

Mit Bezug auf Fig. 8 umfasst die Verstelleinheit 18 zwei parallel geführte Stangen 62a, 62b, die einerseits über Lager 64a, 64b mit einer der Lagervorrichtungen 20a, 20b, andererseits über Lager 66a, 66b an den Abtastkopf 14 gekoppelt sind. Durch einen Schrittmotor 68 mit integrierter Spindel 69 kann die Stange 62a ausgelenkt werden, wobei diese Bewegung als korrespondierende Auslenkung auf die Stange 62b übertragen wird. Damit lässt sich der Abstand zwischen Speicherschicht 12 und Empfangsvorrichtung, d. h. Abtastkopf 14, hochpräzise einstellen. Federn 70a, 70b sorgen für eine möglichst spielfreie Verspannung der Verstelleinheit 18.

Eine derartige Abstandseinstellung kann für verschiedene Speicherschichten jeweils vor Beginn eines Auslesevorgangs erfolgen, wobei während des Auslesevorgangs der Abstand vorteilhafterweise beibehalten wird. Dies verbessert die Auslesequalität, da verschiedene Speicherschichten produktionsbedingt insbesondere verschiedene Dicken haben, so dass bei unterschiedlichen Speicherschichten 12 unterschiedliche Abstände zwischen der Oberfläche der jeweiligen Speicherschicht 12 und der in dem Abtastkopf 14 enthaltenen Empfangsvorrichtung vorliegen würden. Der Abstand kann während eines Auslesevorgangs vorteilhafterweise nachgeregelt werden. Dies erfolgt einfachheitshalber mittels des Steuermittels 15. Insbesondere für die Realisierung der letztgenannten Variante ist es von Vorteil, wenn der Abstand während eines Abtastvorgangs kontinuierlich bestimmt wird. Dazu eignet sich beispielsweise eine mechanische Abtastung durch ein Messrad, das mit minimaler Auflagekraft auf der Oberfläche der Speicherschicht 12 während des Abtastvorgangs mitläuft und das Niveau der Speicherschicht auf ein Messsystem überträgt. Alternativ kann auch eine berührungslose Abstandsmessung verwendet werden, wobei jedoch darauf zu achten ist, dass dadurch die Speicherschicht nicht zur Emission von Strahlung angeregt wird.

Es kann vorgesehen sein, dass für wiederholte Auslesevorgänge der selben Speicherschicht 12 das Ergebnis der vorher durchgeführten Normierung, beziehungsweise der Abstandsmessung, in einem Speicher 17 (siehe Fig. 1) abgelegt und der Speicherschicht zugeordnet wird. Besonders vorteilhaft lässt sich dies realisieren, wenn die Speicherschicht 12 in einer Kassette gelagert wird und diese Kassette über einen derartigen Speicher verfügt. Die Kassette wird zum Auslesen der in ihr enthaltenen Speicherschicht 12 in den erfindungsgemäßen Scanner eingeführt und die Speicherschicht 12 anschließend aus der Kassette heraus- und in den Scanner hineingezogen. Eine Übertragung des in dem Speicher abgelegten Ergebnisses der zuvor durchgeführten Abstandsmessung oder Normierung kann einfachheitshalber durch einen Transponder auf die erfindungsgemäße Vorrichtung zum Auslesen der Information aus der Speicherschicht übertragen werden. Es ist aber auch möglich, das Ergebnis der zuvor durchgeführten Abstandsmessung oder der Normierung nach der Durchführung in dem Speicher 17 des Scanners abzuspeichern. Nach einem erneuten Erkennen der zugeordneten Speicherschicht kann der abgespeicherte Abstand des Abtastkopfes 14 zu der Ablagefläche 16 abgerufen und eingestellt werden.

Fig. 9 zeigt, dass durch die Verwendung von Luftlagern ein Pendeln des Abtastkopfes 14 um die z-Achse ermöglicht wird, ohne dass es zu einem Slip-Stick-Effekt kommt. Dadurch ist die erfindungsgemäße Vorrichtung besonders auch für einen beidseitigen Antrieb der Empfangsvorrichtung 26 geeignet.

Die erfindungsgemäße Vorrichtung ist sowohl bei Varianten einsetzbar, bei denen die Speicherschicht 12 und die Ablagefläche 16 fest in der Vorrichtung montiert sind. Sie ist auch einsetzbar bei einer Variante, bei der die Speicherschicht 16, gegebenenfalls aufgebracht auf einer zusätzlichen Trägerschicht, beispielsweise aus Aluminium, lediglich zum Auslesen der Speicherschicht 12 in die Vorrichtung eingeführt wird.

Für den Fall, dass über einen der Speicherschicht zugeordneten Transponder signalisiert wird, dass für die entsprechende Speicherschicht noch keine Normierung beziehungsweise Abstandsmessung vorgenommen wurde, kann vorgesehen sein, dass dies automatisch von der erfindungsgemäßen Auslesevorrichtung initiiert wird.

## Patentansprüche

1. Vorrichtung (10) zum Auslesen von in einer Speicherschicht (12) abgespeicherter Information mit
- einer Empfangsvorrichtung (14) zum Empfangen einer von der Speicherschicht (12) ausgesandten Emissionsstrahlung,
- einer Ablagefläche (16) zum Ablegen der Speicherschicht (12), wobei durch die Ablagefläche (16) eine x-y-Ebene definiert ist, und
- einem Führungsmittel (20a, 20b) zum Führen der Empfangsvorrichtung (14) auf einer Führungsfläche (11a, 11b, 16) während des Erzeugens einer Relativbewegung zwischen der Empfangsvorrichtung (14) und der Speicherschicht (12) in x-Richtung, wobei das Führungsmittel (20a, 20b) eine erste Teilführung (30a, 30c) zur Erzielung eines Abstandes in eine z-Richtung, die senkrecht zur x-y-Ebene liegt, zwischen der Führungsfläche (11a, 11 b, 16) und dem Führungsmittel (20a, 20b) und eine zweite Teilführung (30b, 30d) zur Erzielung eines Abstandes zwischen der Führungsfläche (11a, 11b, 16) und dem Führungsmittel (20a, 20b) in z-Richtung aufweist, und die erste Teilführung (30a, 30c) auf der - in z-Richtung betrachtet - einen Seite der Ablagefläche (16) und die zweite Teilführung (30b, 30d) auf der - in z-Richtung betrachtet - anderen Seite der Ablagefläche (16) angeordnet ist, wobei die erste Teilführung (30a, 30c) und die zweite Teilführung (30b; 30d) jeweils mindestens ein Luftlager (36) umfassen, durch welche im Betrieb der Vorrichtung ein Luftspalt zwischen dem Führungsmittel (20a, 20b) und der Führungsfläche (11a, 11b, 16) ausgebildet wird,
**dadurch gekennzeichnet, dass** die Führungsfläche (11a, 11b, 16) von der Speicherschicht (12) unabhängig ist, und
die erste Teilführung (30a, 30c) und die zweite Teilführung (30b, 30d) miteinander verbunden und so gegeneinander vorgespannt sind, dass sie zangenartig auf die Ablagefläche (16) wirken.

2. Vorrichtung nach Anspruch 1, **dadurch gekennzeichnet, dass** das Niveau der Führungsfläche (11a,11 b, 16) in z-Richtung mit dem Niveau der Ablagefläche (16) in z-Richtung übereinstimmt und die Führungsfläche (11a, 11 b, 16) zwei Teilführungsflächen (11a, 11b) aufweist, die in y-Richtung beidseitig der Ablagefläche (16) angeordnet sind.

3. Vorrichtung nach Anspruch 2, **dadurch gekennzeichnet, dass** die Teilführungsflächen (11a, 11b) mit der Ablagefläche (16) verbunden sind.

4. Vorrichtung nach Anspruch 3, **dadurch gekennzeichnet, dass** die Teilführungsflächen (11a, 11b) mit der Ablagefläche (16) integral verbunden sind.

5. Vorrichtung nach einem der vorhergehenden Ansprüche, **dadurch gekennzeichnet, dass** die Führungsfläche (11a, 11b, 16) eine Glasoberfläche aufweist.

6. Vorrichtung nach einem der vorhergehenden Ansprüche, **dadurch gekennzeichnet, dass** das Führungsmittel (20a, 20b) ein Lager (20) zum Lagern der Empfangsvorrichtung (14) aufweist.

7. Vorrichtung nach einem der vorhergehenden Ansprüche, **dadurch gekennzeichnet, dass** die erste Teilführung (30a, 30c) und die zweite Teilführung (30b, 30d) durch mindestens eine Feder (51 b) gegeneinander vorgespannt sind.

8. Vorrichtung nach einem der vorhergehenden Ansprüche, **dadurch gekennzeichnet, dass** die erste Teilführung (30a, 30c) und die zweite Teilführung (30b; 30d) über eine in x-Richtung verlaufende Drehachse (53a, 53b) miteinander verbunden sind.

9. Vorrichtung nach einem der vorhergehenden Ansprüche, **dadurch gekennzeichnet, dass** mindestens ein Luftlager (36) über eine punktförmige Verbindung (40, 42) mit der Empfangsvorrichtung (14) gekoppelt ist.

10. Vorrichtung nach einem der vorhergehenden Ansprüche, **dadurch gekennzeichnet, dass** die erste Teilführung (30a, 30c) oder die zweite Teilführung (30b; 30d) wenigstens zwei in x-Richtung hintereinander angeordnete Unter-Teilführungen (30a1, 30a2) aufweist.

11. Vorrichtung nach einem der vorhergehenden Ansprüche, **dadurch gekennzeichnet, dass** die erste Teilführung (30a, 30c) und die zweite Teilführung (30b; 30d) jeweils - in y-Richtung betrachtet - beidseitig der Ablagefläche (16) vorhanden sind.

12. Vorrichtung nach einem der vorhergehenden Ansprüche, **dadurch gekennzeichnet, dass** eine dritte Teilführung (34a) zur Erzielung eines Abstandes in y-Richtung, und eine vierte Teilführung (34b) zur Erzielung eines Abstandes in y-Richtung vorhanden sind, und die dritte Teilführung - in y-Richtung betrachtet - auf der einen Seite der Ablagefläche (16) und die vierte Teilführung - in y-Richtung betrachtet - auf der anderen Seite der Ablagefläche (16) angeordnet ist.

13. Vorrichtung nach Anspruch 12, **dadurch gekennzeichnet, dass** die dritte Teilführung (34a) und die vierte Teilführung (34b) miteinander verbunden und so gegeneinander vorgespannt sind, dass sie zangenartig auf die Ablagefläche (16) wirken.

14. Verfahren zum Auslesen von in einer Speicherschicht (12) abgespeicherter Information unter Verwendung einer Empfangsvorrichtung (14) zum Empfangen von Emissionsstrahlung, die von der Speicherschicht (12) ausgegeben wurde, wobei sich die Speicherschicht (12) auf einer Ablagefläche (16) befindet, durch die eine xy-Ebene definiert wird, folgende Schritte umfassend:
a) Empfangen einer von der Speicherschicht (12) ausgesandten Emissionsstrahlung,
b) Erzeugen einer Relativbewegung zwischen der Empfangsvorrichtung (14) und der Speicherschicht (12) in x-Richtung, und
c) Führen der Empfangsvorrichtung (14) während des Erzeugens der Relativbewegung mittels eines Führungsmittels (20a, 20b) auf einer Führungsfläche (11a, 11b, 16), wobei mittels einer ersten Teilführung ein Abstand zwischen der Führungsfläche (11a, 11b, 16) und dem Führungsmittel (20a, 20b) in eine z-Richtung, die senkrecht zur x-y-Ebene liegt, auf der - in z-Richtung betrachtet - einen Seite der Ablagefläche (16) und mittels einer zweiten Teilführung ein Abstand zwischen der Führungsfläche (11a, 11b, 16) und dem Führungsmittel (20a, 20b) in z-Richtung auf der - in z-Richtung betrachtet - anderen Seite der Ablagefläche (16) eingestellt wird, wobei die erste Teilführung und die zweite Teilführung jeweils mindestens ein Luftlager aufweisen, durch welche ein Luftspalt zwischen dem Führungsmittel (20a, 20b) und der Führungsfläche (11 a, 11b, 16) ausgebildet wird,
**dadurch gekennzeichnet, dass** die Führungsfläche (11a, 11b, 16) von der Speicherschicht (12) unabhängig ist, und
die erste Teilführung (30a, 30c) und die zweite Teilführung (30b, 30d) miteinander verbunden und gegeneinander vorgespannt sind und zangenartig auf die Ablagefläche (16) wirken.

## Claims

1. A device (10) for reading out information stored in a storage layer (12) comprising
- a receiving device (14) for receiving an emission radiation emitted by the storage layer (12),
- a delivery surface (16) for delivering the storage layer (12), an x-y plane being defined by the delivery surface (16), and
- a guide means (20a, 20b) for guiding the receiving device (14) on a guide surface (11a, 11b, 16) during the execution of a relative movement between the receiving device (14) and the storage layer (12) in the x direction, the guide means (20a, 20b) exhibiting a first partial guide (30a, 30c) for obtaining a distance in a z direction, which is perpendicular to the x-y plane, between the guide surface (11a, 11b, 16) and the guide means (20a, 20b) and a second partial guide (30b, 30d) for obtaining a distance between the guide surface (11a, 11b, 16) and the guide means (20a, 20b) in the z direction, and the first partial guide (30a, 30c) being arranged on one side - viewed in the z direction - of the delivery surface (16) and the second partial guide (30b, 30d) on the other side - viewed in the z direction - of the delivery surface (16), the first partial guide (30a, 30c) and the second partial guide (30b; 30d) each comprising at least one air bearing (36) by means of which an air gap is formed between the guide means (20a, 20b) and the guide surface (11a, 11b, 16) during the operation of the device
**characterised in that** the guide surface (11a, 11b, 16) is independent of the storage layer (12), and **in that** the first partial guide (30a, 30c) and the second partial guide (30b, 30d) are connected to one another and are pretensioned against one another so that they act like pincers on the delivery surface (16).

2. Device according to claim 1, wherein the level of the guide surface (11a, 11b, 16) in the z direction coincides with the level of the delivery surface (16) in the z direction and the guide surface (11a, 11b, 16) exhibits two partial guide surfaces (11a, 11b) which are arranged on both sides of the delivery surface (16) in the y direction.

3. Device according to claim 2, wherein the partial guide surfaces (11a, 11b) are connected to the delivery surface (16).

4. Device according to claim 3, wherein the partial guide surfaces (11a, 11b) are integrally connected to the delivery surface (16).

5. Device according to any of the preceding claims, wherein the guide surface (11a, 11b, 16) exhibits a glass surface.

6. Device according to any of the preceding claims, wherein the guide means (20a, 20b) exhibits a bearing (20) for supporting the receiving device (14).

7. Device according to any of the preceding claims, wherein the first partial guide (30a, 30c) and the second partial guide (30b, 30d) are pretensioned against one another by means of at least one spring (51b).

8. Device according to any of the preceding claims, wherein the first partial guide (30a, 30c) and the second partial guide (30b; 30d) are connected to one another via a rotating shaft (53a, 53b) running in the x direction.

9. Device according to any of the preceding claims, wherein at least one air bearing (36) is coupled to the receiving device (14) via a point-shaped connection (40, 42).

10. Device according to any of the preceding claims, wherein the first partial guide (30a, 30c) or the second partial guide (30b; 30d) exhibits at least two sub-partial guides (30al, 30a2) arranged behind one another in the x direction.

11. Device according to any of the preceding claims, wherein the first partial guide (30a, 30c) and the second partial guide (30b; 30d) are each present on both sides - viewed in the y direction - of the delivery surface (16).

12. Device according to any of the preceding claims, wherein a third partial guide (34a) for obtaining a distance in the y direction, and a fourth partial guide (34b) for obtaining a distance in the y direction are present, and the third partial guide is arranged on one side - viewed in the y direction - of the delivery surface (16) and the fourth partial guide on the other side - viewed in the y direction - of the delivery surface (16).

13. Device according to claim 12, wherein the third partial guide (34a) and the fourth partial guide (34b) are connected to one another and are pretensioned against one another so that they act like pincers on the delivery surface (16).

14. A method for reading out information stored in a storage layer (12) using a receiving device (14) for receiving emission radiation emitted by the storage layer (12), the storage layer (12) being present on a delivery surface (16) by which an x-y plane is defined, said method comprising following steps:
a) receiving an emission radiation emitted by the storage layer (12),
b) executing a relative movement between the receiving device (14) and the storage layer (12) in the x direction, and
c) guiding the receiving device (14) during the execution of the relative movement by means of a guide means (20a, 20b) on a guide surface (11a, 11b, 16), a distance between the guide surface (11a, 11b, 16) and the guide means (20a, 20b) in a z direction being perpendicular to the x-y plane, on one side - viewed in the z direction - of the delivery surface (16) being adjusted by means of a first partial guide and a distance between the guide surface (11a, 11b, 16) and the guide means (20a, 20b) in the z direction on the other side - viewed in the z direction - of the delivery surface (16) being adjusted by means of a second partial guide, the first partial guide and the second partial guide exhibiting each at least one air bearing, by which an air gap is formed between the guide means (20a, 20b) and the guide surface (11a, 11b, 16),
**characterised in that** the guide surface (11a, 11b, 16) is independent of the storage layer (12), and **in that**
the first partial guide (30a, 30c) and the second partial guide (30b, 30d) are connected to one another and are pretensioned against one another and act like pincers on delivery surface (16).

## Revendications

1. Dispositif (10) de lecture d'informations mémorisées dans une couche de mémorisation (12), comportant
- un dispositif récepteur (14) pour la réception d'un rayonnement d'émission émis par la couche de mémorisation (12),
- une surface de dépôt (16) pour la dépose de la couche de mémorisation (12), la surface de dépôt (16) définissant un plan x - y, et
- un moyen de guidage (20a, 20b) pour le guidage du dispositif récepteur (14) sur une surface de guidage (11a, 11b, 16) pendant la génération d'un mouvement relatif dans la direction x entre le dispositif récepteur (14) et la couche de mémorisation (12), le moyen de guidage (20a, 20b) comportant un premier guidage partiel (30a, 30c) pour l'obtention d'un écartement dans une direction z, qui est située perpendiculairement au plan x - y, entre la surface de guidage (11a, 11b, 16) et le moyen de guidage (20a, 20b), et un deuxième guidage partiel (30b, 30d) pour l'obtention d'un écartement dans la direction z entre la surface de guidage (11a, 11b, 16) et le moyen de guidage (20a, 20b), et le premier guidage partiel (30a, 30c) étant disposé d'un côté de la surface de dépôt (16) - considéré dans la direction z -, alors que le deuxième guidage partiel (30b, 30d) est disposé de l'autre côté de la surface de dépôt (16) - considéré dans la direction z -, le premier guidage partiel (30a, 30c) et le deuxième guidage partiel (30b ; 30d) comportant chacun au moins un coussinet pneumatique (36), par lequel une fente d'air est formée pendant le fonctionnement du dispositif entre le moyen de guidage (20a, 20b) et la surface de guidage (11a, 11b, 16),
**caractérisé en ce que** la surface de guidage (11a, 11b, 16) est indépendante de la couche de mémorisation (12), et
**en ce que** le premier guidage partiel (30a, 30c) et le deuxième guidage partiel (30b, 30d) sont reliés entre eux, et précontraints l'un par rapport à l'autre de telle sorte qu'ils agissent comme une pince sur la surface de dépôt (16) .

2. Dispositif selon la revendication 1, **caractérisé en ce que** le niveau de la surface de guidage (11a, 11b, 16) dans la direction z correspond au niveau de la surface de dépôt (16) dans la direction z, et **en ce que** la surface de guidage (11a, 11b, 16) comporte deux surfaces de guidage partiel (11a, 11b), qui sont disposées de part et d'autre de la surface de dépôt (16) dans la direction y.

3. Dispositif selon la revendication 2, **caractérisé en ce que** les surfaces de guidage partiel (11a, 11b) sont reliées à la surface de dépôt (16).

4. Dispositif selon la revendication 3, **caractérisé en ce que** les surfaces de guidage partiel (11a, 11b) sont reliées intégralement à la surface de dépôt (16).

5. Dispositif selon l'une des revendications précédentes, **caractérisé en ce que** la surface de guidage (11a, 11b, 16) comporte une surface en verre.

6. Dispositif selon l'une des revendications précédentes, **caractérisé en ce que** le moyen de guidage (20a, 20b) comporte un coussinet (20) pour le logement du dispositif récepteur (14).

7. Dispositif selon l'une des revendications précédentes, **caractérisé en ce que** le premier guidage partiel (30a, 30c) et le deuxième guidage partiel (30b, 30d) sont précontraints l'un par rapport à l'autre par au moins un ressort (51b).

8. Dispositif selon l'une des revendications précédentes, **caractérisé en ce que** le premier guidage partiel (30a, 30c) et le deuxième guidage partiel (30b ; 30d) sont reliés entre eux par l'intermédiaire d'un axe de rotation (53a, 53b) s'étendant dans la direction x.

9. Dispositif selon l'une des revendications précédentes, **caractérisé en ce qu'**au moins un coussinet pneumatique (36) est couplé au dispositif récepteur (14) par l'intermédiaire d'une liaison ponctuelle (40, 42).

10. Dispositif selon l'une des revendications précédentes, **caractérisé en ce que** le premier guidage partiel (30a, 30c) ou le deuxième guidage partiel (30b ; 30d) comporte au moins deux sous-guidages partiels (30a1, 30a2) disposés l'un derrière l'autre dans la direction x.

11. Dispositif selon l'une des revendications précédentes, **caractérisé en ce que** - considéré dans la direction y - le premier guidage partiel (30a, 30c) et le deuxième guidage partiel (30b ; 30d) sont prévus de part et d'autre de la surface de dépôt (16).

12. Dispositif selon l'une des revendications précédentes, **caractérisé en ce qu'**il est prévu un troisième guidage partiel (34a) pour l'obtention d'un écartement dans la direction y, et un quatrième guidage partiel (34b) pour l'obtention d'un écartement dans la direction y, et **en ce que** - considéré dans la direction y - le troisième guidage partiel est disposé d'un côté de la surface de dépôt (16), et - considéré dans la direction y - le quatrième guidage partiel est disposé de l'autre côté de la surface de dépôt (16).

13. Dispositif selon la revendication 12, **caractérisé en ce que** le troisième guidage partiel (34a) et le quatrième guidage partiel (34b) sont reliés entre eux, et précontraints l'un par rapport à l'autre de telle sorte qu'ils agissent comme une pince sur la surface de dépôt (16).

14. Procédé de lecture d'informations mémorisées dans une couche de mémorisation (12), avec utilisation d'un dispositif récepteur (14) pour la réception de rayonnement d'émission émis par la couche de mémorisation (12), la couche de mémorisation (12) se trouvant sur une surface de dépôt (16) qui définit un plan x - y, comportant les étapes suivantes :
a) réception d'un rayonnement d'émission émis par la couche de mémorisation (12),
b) génération d'un mouvement relatif dans la direction x entre le dispositif récepteur (14) et la couche de mémorisation (12), et
c) guidage du dispositif récepteur (14) pendant la génération du mouvement relatif à l'aide d'un moyen de guidage (20a, 20b) sur une surface de guidage (11a, 11b, 16), un écartement entre la surface de guidage (11a, 11b, 16) et le moyen de guidage (20a, 20b) dans une direction z, qui est située perpendiculairement au plan x - y, étant réglé au moyen d'un premier guidage partiel d'un côté de la surface de dépôt (16) - considéré dans la direction z -, et un écartement entre la surface de guidage (11a, 11b, 16) et le moyen de guidage (20a, 20b) étant réglé dans la direction z au moyen d'un deuxième guidage partiel de l'autre côté de la surface de dépôt (16) - considéré dans la direction z -, le premier guidage partiel et le deuxième guidage partiel comportant chacun au moins un coussinet pneumatique, par lequel une fente d'air est formée entre le moyen de guidage (20a, 20b) et la surface de guidage (11a, 11b, 16),
**caractérisé en ce que** la surface de guidage (11a, 11b, 16) est indépendante de la couche de mémorisation (12), et
**en ce que** le premier guidage partiel (30a, 30c) et le deuxième guidage partiel (30b, 30d) sont reliés entre eux, et précontraints l'un par rapport à l'autre et agissent comme une pince sur la surface de dépôt (16).
